# EUROPÄISCHE PATENTANMELDUNG

(11) **EP 1 193 679 A2**
(43) Veröffentlichungstag der Anmeldung: **03.04.2002**
(21) Anmeldenummer: 01122786.5
(22) Anmeldetag: 21.09.2001
(51) Int. Cl.: G09G 3/36, B60Q 3/04

(54) **Flüssigkristall-Anzeige, insbesondere in einem Kraftfahrzeug**

(30) Priorität: 28.09.2000 DE 10049273
(71) Anmelder: SIEMENS AKTIENGESELLSCHAFT, 80333 München (DE)
(72) Erfinder: Simon, Ernst-Ulrich, 61440 Oberursel/Ts. (DE); Cezanne, Gerd, 65824 Schwalbach (DE); Brandt, Peter, 63739 Aschaffenburg (DE)

(57) **Zusammenfassung**

Eine Flüssigkristall-Anzeige, insbesondere in einem Kraftfahrzeug, mit einer Flüssigkristall-Zelle (1), welche eine elektrische Heizung hat, die durch eine elektrisch leitende Heizschicht (4) auf einem Substrat und zwei an entgegengesetzten Seiten des Substrates über die Breite der Heizschicht (4) führenden Stromschienen (5, 6) gebildet ist, bestehen die beiden Stromschienen (5, 6) aus einem Streifen von auf die Heizschicht (4) aufgebrachten Leitklebern. In diese Leitkleber ist jeweils ein Metallplättchen 7, 8 eingesetzt, über welches die Kontaktierung mit einem Federelement (9, 10) erfolgt.

## Beschreibung

Die Erfindung betrifft eine Flüssigkristall-Anzeige, insbesondere in einem Kraftfahrzeug, mit einer Flüssigkristall-Zelle, welche eine elektrische Heizung hat, die durch eine elektrisch leitende Heizschicht auf einem Substrat und zwei an entgegengesetzten Seiten des Substrates über die Breite der Heizschicht führenden Stromschienen gebildet ist, die von einem Heizstrom durchfließbar sind.

Flüssigkristall-Anzeigen der vorstehenden Art sind derzeit bekannt und gebräuchlich. Die elektrische Heizung ermöglicht es, auch bei niedrigen Temperaturen kurze Schaltzeiten zu erreichen (was aus Gründen der Verkehrssicherheit vor allem in Kraftfahrzeugen wichtig ist), so dass sich beispielsweise auch DSTN-Zellen für den Einsatz im Kraftfahrzeug eignen. Die beiden Stromschienen, meist Null-Ohm-Schienen genannt, haben die Aufgabe, für einen gleichmäßigen Stromfluss über die gesamte Breite der elektrisch leitenden Heizschicht der Heizung zu sorgen, so dass sich eine gleichmäßige Erwärmung der Flüssigkristall-Zelle über ihre gesamte Fläche ergibt. Die Stromschienen werden bisher als auf die Heizschicht aufgebrachte Metallschienen ausgebildet, was zu vergleichsweise hohen Kosten führt und außerdem eine nicht zufriedenstellende Dauerhaltbarkeit bedeutet.

Der Erfindung liegt das Problem zugrunde, eine Flüssigkristall-Anzeige der eingangs genannten Art so auszubilden, dass die Mittel zur Kontaktierung ihrer Heizung und zur Stromverteilung in ihrer Heizschicht möglichst einfach ausgebildet sind.

Dieses Problem wird erfindungsgemäß dadurch gelöst, dass die beiden Stromschienen durch einen als Streifen auf die Heizschicht aufgebrachten Leitkleber gebildet sind.

Durch einen solchen Leitkleber kann man die beiden erforderlichen Stromschienen auf sehr einfache und damit kostengünstige Weise erzeugen. Zugleich wird durch den Leitkleber eine zuverlässige und dauerhafte Kontaktierung der Heizschicht erreicht.

Besonders kostengünstig ist eine Flüssigkristall-Anzeige mit einer Heizung zu verwirklichen, wenn gemäß einer vorteilhaften Weiterbildung der Erfindung die die Heizung bildende, elektrisch leitende Heizschicht und die Stromschienen unmittelbar auf einer Scheibe der Flüssigkristall-Zelle aufgebracht sind.

Von besonderem Vorteil ist es, wenn die Flüssigkristall-Zelle eine DSTN-Zelle mit einer aktiven, zur Informationsdarstellung ansteuerbaren und einer passiven, nicht ansteuerbaren Zelle ist und wenn die Heizschicht und die Stromschienen auf einer Scheibe der passiven Zelle aufgebracht sind. Auf diese Weise kann die bei DSTN-Zellen mit einer aktiven und einer passiven Zelle üblicherweise zur Farbkompensation vorgesehene passive Zelle Kosten und Bauteilanzahl minimierend auch zur Heizung der Anzeige herangezogen werden.

Falls der Hersteller von Flüssigkristall-Zellen aus produktionstechnischen Gründen nicht in der Lage ist, Flüssigkristall-Zellen mit integrierter Heizung herzustellen, oder aus Gründen der Variabilität kann man die Heizung auch nachträglich als separates Bauteil hinzufügen, wenn gemäß einer anderen Weiterbildung der Erfindung die die Heizung bildende, elektrisch leitende Heizschicht und die Stromschienen auf einer separaten, mit der Flüssigkristall-Zelle verbundenen Scheibe aufgebracht sind.

Newton-Ringe zwischen der Flüssigkristall-Zelle und der die Heizung bildenden, separaten Scheibe lassen sich dadurch vermeiden, dass die Scheibe unter Bildung eines engen Zwischenraumes mit der Flüssigkristall-Zelle verbunden ist.

Leitkleber bilden beim Aushärten an ihrer Oberfläche eine Harzschicht, durch welche die elektrische Leitfähigkeit in diesem Bereich vermindert wird. Der elektrische Übergangswiderstand zwischen einer die Leitschiene kontaktierenden Einrichtung und der jeweiligen Leitschiene ist besonders gering, wenn zur Kontaktierung der Stromschienen in die Oberfläche der Stromschienen ein Metallplättchen eingesetzt ist, gegen welches von der der Stromschiene abgewandten Seite ein Federelement mit Vorspannung anliegt. Das Federelement sorgt für eine Druckkontaktierung und ist in der Lage, Toleranzen auszugleichen.

Besonders vorteilhaft ist es, wenn gemäß einer anderen Weiterbildung der Erfindung das Metallplättchen auf der Seite der Stromschiene eine Oberfläche aus einem anderen Metall hat als auf der Seite des Federelementes. Durch diese Gestaltung kann man bei dem Metallplättchen auf die Eigenschaften des Leitklebers Rücksicht nehmen (und verhindern, dass das Metallplättchen keine ausreichende Haftung an dem Leitkleber aufweist), so dass keine elektrochemische Spannungsreihe wirksam wird. Auf der dem Leitkleber abgewandten Seite kann man dafür sorgen, dass eine optimale Materialpaarung zwischen dem Metallplättchen und dem Federelement gegeben ist, so dass insbesondere Korrosion durch die elektrochemische Spannungsreihe ausgeschlossen werden kann.

Die Verbindung zwischen den Stromschienen und einer Zuführung bzw. Abführung der elektrischen Energie für die Heizung ermöglicht durch Freiheitsgrade in alle Richtungen einen besonders guten Toleranzausgleich, wenn das Federelement eine Schraubenfeder ist.

Zur Verringerung der Teilevielfalt kann man gemäß einer anderen Weiterbildung der Erfindung vorsehen, dass das Metallplättchen durch einen Teil des Federelementes gebildet ist.

Die Erfindung lässt verschiedene Ausführungsformen zu. Zur weiteren Verdeutlichung ihres Grundprinzips sind zwei davon in der Zeichnung dargestellt und werden nachfolgend beschrieben. Diese zeigen in
- Fig. 1: einen schematischen Schnitt durch eine Flüssigkristall-Anzeige nach der Erfindung,
- Fig.2: eine perspektivische Ansicht einer Heizung einer Flüssigkristall-Zelle nach der Erfindung.

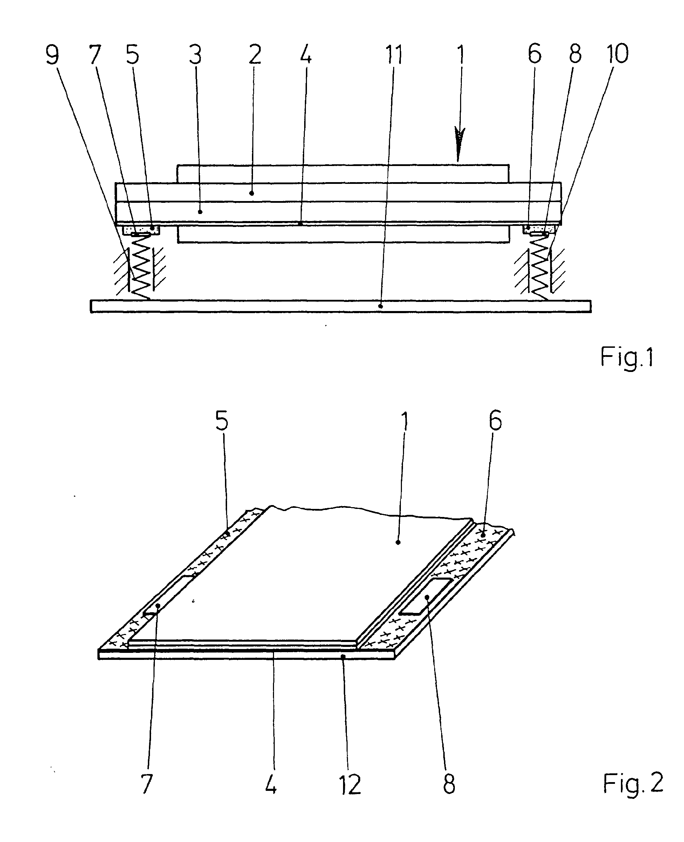

Die Figur 1 zeigt eine aktive als DSTN-Zelle ausgebildete Flüssigkristall-Zelle 1, bei der zwei Scheiben 2, 3 an entgegengesetzten Seiten überstehen und die z. B. in ein hier nicht dargestelltes Kombinationsanzeigeinstrument eines Kraftfahrzeugs eingebaut ist. Die Unterseite der Scheibe 3 ist mit einer Heizschicht 4 versehen, die beispielsweise aus ITO(Indium-Zinn-Oxid)-Metall oder Zinnoxid (TO) bestehen kann. Auf dieser Heizschicht 4 ist jeweils eine Stromschiene 5, 6 aufgebracht, die aus einem Streifen eines Leitklebers gebildet ist. In die Oberfläche dieses die Stromschienen 5, 6 bildenden Leitklebers ist jeweils ein Metallplättchen 7, 8 eingesetzt, gegen welches sich ein als Schraubenfeder ausgebildetes Federelement 9, 10 abstützt. Diese Federelemente 9, 10 stützen sich mit ihrem jeweils anderen Ende auf einer Leiterplatte 11 ab, so dass über diese Leiterplatte 11 die Heizschicht 4 mit elektrischer Energie Verbindung hat.

Bei dem gezeigten Ausführungsbeispiel bilden die Metallplättchen 7, 8 separate Bauteile. Möglich ist es jedoch auch, diese unmittelbar an den Federelementen 9, 10 anzuformen, was beispielsweise einfach ist, wenn man die Federelemente 9, 10 statt als Schraubenfeder als Blattfeder ausbildet.

Bei der in Figur 2 gezeigten Flüssigkristall-Zelle 1 ist als Heizung eine separate Scheibe 12 vorgesehen, welche die Heizschicht 4 trägt. An zwei überstehenden Seiten der Scheibe 12 erkennt man wiederum die Stromschienen 5, 6 mit den sich darin befindenden Metallplättchen 7, 8. Diese Metallplättchen können auf der die Stromschiene 5, 6 berührenden Seite eine Oberfläche aus einem anderen Metall aufweisen als an der die Federelemente 9, 10 berührenden Seite. Nicht erkennbar ist, dass die Scheibe 12 von der Flüssigkristall-Zelle 1 einen geringen Zwischenraum haben soll, so dass Newton-Ringe vermieden werden.

## Patentansprüche

1. Flüssigkristall-Anzeige, insbesondere in einem Kraftfahrzeug, mit einer Flüssigkristall-Zelle, welche eine elektrische Heizung hat, die durch eine elektrisch leitende Heizschicht auf einem Substrat und zwei an entgegengesetzten Seiten des Substrates über die Breite der Heizschicht führenden Stromschienen gebildet ist, die von einem Heizstrom durchfließbar sind, **dadurch gekennzeichnet, dass** die beiden Stromschienen (5, 6) durch einen als Streifen auf die Heizschicht (4) aufgebrachten Leitkleber gebildet sind.

2. Flüssigkristall-Anzeige nach Anspruch 1, **dadurch gekennzeichnet, dass** die die Heizung bildende, elektrisch leitende Heizschicht (4) und die Stromschienen (5, 6) unmittelbar auf einer Scheibe (3) der Flüssigkristall-Zelle (1) aufgebracht sind.

3. Flüssigkristall-Anzeige nach Anspruch 2, **dadurch gekennzeichnet, dass** die Flüssigkristall-Zelle (1) eine DSTN-Zelle mit einer aktiven, zur Informationsdarstellung ansteuerbaren und einer passiven, nicht ansteuerbaren Zelle ist und dass die Heizschicht (4) und die Stromschienen (5, 6) auf einer Scheibe (3) der passiven Zelle aufgebracht sind.

4. Flüssigkristall-Anzeige nach Anspruch 1, **dadurch gekennzeichnet, dass** die die Heizung bildende, elektrisch leitende Heizschicht (4) und die Stromschienen (5, 6) auf einer separaten, mit der Flüssigkristall-Zelle (1) verbundenen Scheibe (12) aufgebracht sind.

5. Flüssigkristall-Anzeige nach Anspruch 4, **dadurch gekennzeichnet, dass** die Scheibe (12) unter Bildung eines engen Zwischenraumes mit der Flüssigkristall-Zelle (1) verbunden ist.

6. Flüssigkristall-Anzeige nach zumindest einem der vorangehenden Ansprüche, **dadurch gekennzeichnet, dass** zur Kontaktierung der Stromschienen (5, 6) in die Oberfläche der Stromschienen (5, 6) ein Metallplättchen (7, 8) eingesetzt ist, gegen welches von der der Stromschiene (5, 6) abgewandten Seite ein Federelement (9, 10) mit Vorspannung anliegt.

7. Flüssigkristall-Anzeige nach Anspruch 6, **dadurch gekennzeichnet, dass** das Metallplättchen (7, 8) auf der Seite der Stromschiene (5, 6) eine Oberfläche aus einem anderen Metall hat als auf der Seite des Federelementes (9, 10).

8. Flüssigkristall-Anzeige nach zumindest einem der vorangehenden Ansprüche, **dadurch gekennzeichnet, dass** das Federelement (9, 10) eine Schraubenfeder ist.

9. Flüssigkristall-Anzeige nach zumindest einem der vorangehenden Ansprüche, **dadurch gekennzeichnet, dass** das Metallplättchen (7, 8) durch einen Teil des Federelementes (9, 10) gebildet ist.
